# EUROPÄISCHE PATENTSCHRIFT

(11) **EP 3 727 936 B1**
(45) Veröffentlichungstag und Bekanntmachung des Hinweises auf die Patenterteilung: **25.05.2022**
(21) Anmeldenummer: 18759283.7
(22) Anmeldetag: 21.08.2018
(51) Int. Cl.: G06V 20/58, B60R 1/00, G06K 9/62, G06K 9/00, H04N 7/18

(54) **VERFAHREN ZUM ERKENNEN VON ZUMINDEST EINEM AN EINEM KRAFTFAHRZEUG ANLIEGENDEN OBJEKT SOWIE STEUERVORRICHTUNG UND KRAFTFAHRZEUG**
METHOD FOR DETECTING AT LEAST ONE OBJECT PRESENT ON A MOTOR VEHICLE, CONTROL DEVICE, AND MOTOR VEHICLE
PROCÉDÉ DE RECONNAISSANCE D'AU MOINS UN OBJET PRÉSENT SUR UN VÉHICULE AUTOMOBILE ET DISPOSITIF DE COMMANDE ET VÉHICULE AUTOMOBILE

(30) Priorität: 19.12.2017 DE 102017223160
(43) Veröffentlichungstag der Anmeldung: 28.10.2020
(73) Patentinhaber: Volkswagen Aktiengesellschaft, 38440 Wolfsburg (DE)
(72) Erfinder: AL NAHLAOUI, Yasser, 38448 Wolfsburg (DE); SCHLIECKER, Simon, 38304 Wolfenbüttel (DE)
(86) Internationale Anmeldenummer: PCT/EP2018/072537
(87) Internationale Veröffentlichungsnummer: WO 2019/120643

(56) Entgegenhaltungen:
- US-A1- 2005 074 142
- US-A1- 2008 074 067
- US-A1- 2010 082 206
- US-A1- 2014 207 344
- US-A1- 2015 054 950
- US-A1- 2015 360 625

## Beschreibung

Die Erfindung betrifft ein Verfahren zum Erkennen von zumindest einem an einem Kraftfahrzeug anliegenden Objekt. Mittels des Verfahrens kann also erkannt werden, ob ein Objekt an dem Kraftfahrzeug angelehnt ist oder das Kraftfahrzeug berührt. Zu der Erfindung gehören auch eine Steuervorrichtung, mittels welcher das erfindungsgemäße Verfahren durchgeführt werden kann, sowie ein Kraftfahrzeug mit der Steuervorrichtung.

Eine automatisierte Fahrfunktion, bei welcher das Kraftfahrzeug autonom oder automatisiert durch einen Autopiloten des Kraftfahrzeugs angeführt wird, muss eigenständig erkennen können, ob ein Losfahren oder Anfahren nach einer Standzeit möglich ist. Hierzu ist insbesondere sicherzustellen, dass keine Gegenstände und/oder Personen direkt an das Kraftfahrzeug angelehnt sind. Würde der Autopilot dann losfahren, könnten diese Objekte zu Schaden kommen. Ein Beispiel für eine solche automatisierte Fahrfunktion eines Autopiloten ist der sogenannte Parkhauspilot, der es ermöglicht, das Kraftfahrzeug ohne Fahrzeuginsassen, insbesondere ohne Fahrer, auf ein Rufsignal oder Startsignal hin aus einem Parkhaus zu fahren und zu einem Benutzer hin zu fahren.

Aus dem Stand der Technik ist bekannt, dass ein Kraftfahrzeug mittels zumindest einer Kamera seine Umgebung oder seinen Außenbereich überwachen kann.

So ist beispielsweise aus der US 2001/0019356 A1 bekannt, dass ein Kraftfahrzeug mittels einer Kamera andere Verkehrsteilnehmer und parkende Autos und Fußgänger erkennen kann. Hierzu ist aber eine aufwändige Bildverarbeitung notwendig, um die vielfältigen Formen dieser Objekte zuverlässig zu erkennen. Diese Bildverarbeitung auch für das Erkennen von an dem Kraftfahrzeug anliegenden Objekten zu implementieren, würde einen unerwünscht hohen Aufwand bedeuten.

Ein Autopilot für ein Kraftfahrzeug ist aus der EP 1 394 761 A1 bekannt. Dieser Autopilot kann mittels einer Kamera eine Hindernis-Detektion durchführen. Allerdings erfordert diese die Verwendung von zwei Kameras sowie eine aufwändige Bildtransformation. Auch andere Technologien, wie z.B. Ultraschall, zeigen Schwächen im Nahbereich.

In dem Dokument US 2015/054950 A1 ist beschrieben, dass bei einem Pick-up die Verschlussklappe für die Ladefläche daraufhin überwacht werden kann, ob sie noch geöffnet ist, obwohl das Fahrzeug bereits losgefahren ist. Die Überwachung erfolgt dabei bildbasiert. Ist die Klappe allerdings willentlich offengelassen worden, so kann ein Benutzer des Pick-ups das Warnsignal durch Betätigen einer Schaltfläche überstimmen.

Der Erfindung liegt die Aufgabe zugrunde, bei einem parkenden oder stillstehenden Kraftfahrzeug zu erkennen, ob zumindest ein Objekt an das Kraftfahrzeug angelehnt ist oder an dem Kraftfahrzeug anliegt.

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren beschrieben.

Durch die Erfindung ist ein Verfahren zum Erkennen von zumindest einem an einem Kraftfahrzeug anliegenden Objekt bereitgestellt. Bei einem solchen Objekt kann es sich beispielsweise jeweils um einen Gegenstand oder eine Person handeln. Bei dem Verfahren wird durch eine Steuervorrichtung mittels einer Kamera zumindest ein Kamerabild erfasst. Der Erfassungsbereich der Kamera ist dabei in einen Außenbereich des Kraftfahrzeugs ausgerichtet. Mit anderen Worten wird die Umgebung des Kraftfahrzeugs erfasst. Hierbei ist aber vorgesehen, dass der Erfassungsbereich teilweise oder ganz auf eine Außenoberfläche des Kraftfahrzeugs ausgerichtet ist. Mit anderen Worten wird mittels der Kamera ein Teil des Kraftfahrzeugs selbst abgebildet.

Um nun nicht umständlich eine Objekterkennung zum Erkennen zumindest eines anliegenden Objekts durchführen zu müssen, ist erfindungsgemäß vorgesehen, dass in dem zumindest einen Kamerabild durch eine Bildanalyseeinrichtung der Steuervorrichtung für eine Freistandsprüfung, also die Verifizierung, dass kein Objekt an dem Kraftfahrzeug anliegt, geprüft wird, ob zumindest eine vorbestimmte Eigenstruktur des Kraftfahrzeugs abgebildet ist. Es wird also nicht geprüft, ob ein Objekt erkennbar ist, sondern es wird geprüft, auf die zumindest eine Eigenstruktur des Kraftfahrzeugs selbst erkannt werden kann. Während die Bildanalyseeinrichtung zum Erkennen zumindest eines Objekts nicht davon ausgehen kann, dass die optischen Eigenschaften des Objekts bekannt sind und somit das Erkennen des Objekts entsprechend aufwendig ist, ist bei dem erfindungsgemäßen Verfahren die gesuchte optische Eigenschaft der zumindest einen vorbestimmten Eigenstruktur des Kraftfahrzeugs bereits bekannt. Sogar die Lage oder Position der gesuchten zumindest einen Eigenschaftsstruktur in dem zumindest einen Kamerabild kann ebenfalls bekannt sein. Für den Fall, dass die zumindest eine Eigenstruktur durch die Bildanalyseeinrichtung allerdings unauffindbar ist, also nicht erkannt werden kann, wird ein Blockiersignal erzeugt, welches angibt, dass ein Objekt an dem Kraftfahrzeug anliegt. Mit anderen Worten wird bei unauffindbarer Eigenstruktur davon ausgegangen, dass diese Eigenstruktur offenbar durch zumindest ein Objekt abgedeckt oder verdeckt ist. Mit anderen Worten befindet sich dann das zumindest eine Objekt in der Sichtlinie zwischen der Kamera und der gesuchten zumindest einen vorbestimmten Eigenstruktur des Kraftfahrzeugs. Somit kann davon ausgegangen werden, dass ein Objekt an dem Kraftfahrzeug anliegt oder sich zumindest der Art nahe am Kraftfahrzeug befindet, dass es als anliegend klassifiziert werden kann. Falls bei dem Verfahren die zumindest eine Eigenstruktur dagegen erkannt wird, so kann ein Freistandssignal durch die Steuervorrichtung erzeugt werden, welches angibt, dass das Kraftfahrzeug in den Erfassungsbereich der Kamera berührungsfrei steht oder frei steht, also kein Objekt im Erfassungsbereich der Kamera an den Kraftfahrzeug anliegend erkannt wurde. Es kann hierbei vorgesehen sein, dass dieses Freistandssignal dann durch weitere Sensordaten plausibilisiert oder verifiziert wird. Zusätzlich kann die Richtung des anliegenden Objekts signalisiert werden. Z.B. kann eine Anzeige der Richtung vorgesehen sein.

Durch die Erfindung ergibt sich der Vorteil, dass mit geringem Aufwand durch das Suchen der zumindest einen vorbestimmten Eigenstruktur in den zumindest einen Kamerabild zuverlässig erkannt werden kann, ob ein Objekt an dem Kraftfahrzeug anliegt oder nicht. Die Bildanalyseeinrichtung kann beispielsweise als ein Programmmodul für eine Prozessoreinrichtung der Steuervorrichtung ausgestaltet sein. Das erfindungsgemäße Verfahren wird bevorzugt ausschließlich im Stillstand des Kraftfahrzeugs durchgeführt, wenn also eine Änderung des Freizustands durch ein nicht vom Kraftfahrzeug kontrolliertes Objekt vor kommen kann. Dies ist besonders sparsam für die Rechenressourcen.

Die Erfindung sieht vor, dass durch einen Autopiloten des Kraftfahrzeugs ein Startsignal zum Losfahren empfangen wird und der Autopilot aber nur losfährt, also das Kraftfahrzeug nur dann bewegt, falls kein Blockiersignal vorliegt. Der Autopilot kann hierzu durch ein Steuergerät für eine autonome Fahrt oder für ein autonomes Führen des Kraftfahrzeugs bereitgestellt sein. Das Startsignal kann von außerhalb des Kraftfahrzeugs empfangen werden, beispielsweise aus einer Fernbedienung eines Benutzers oder aus dem Internet. Mit anderen Worten kann nach oder mit Empfang des Startsignals die Freistandsprüfung durchgeführt werden und hierdurch erkannt werden, ob das Kraftfahrzeug freisteht. Nur in diesem Fall fährt der Autopilot das Kraftfahrzeug an. Andernfalls bleibt das Kraftfahrzeug unbewegt.

Die Erfindung umfasst auch Ausführungsformen, durch die sich zusätzliche Vorteile ergeben.

Eine Ausführungsform sieht vor, dass durch die Bildanalyseeinrichtung als eine Eigenstruktur eine vorbestimmte Außenkontur des Kraftfahrzeugs in dem zumindest einen Kamerabild gesucht wird. Mit anderen Worten wird ein vorbestimmter Kantenverlauf in dem zumindest einen Kamerabild gesucht oder es wird geprüft, ob dieser Kantenverlauf vorhanden ist. Es handelt sich bei dieser gesuchten Außenkontur um die Freistandskontur, also einen Verlauf von zumindest einer Kannte, wie er sich in dem zumindest einen Kamerabild ergeben muss, falls im Erfassungsbereich der Kamera kein Objekt an dem Kraftfahrzeug anliegt. Eine Eigenstruktur in Form einer Außenkontur oder eines Kantenverlaufs weist den besonderen Vorteil auf, dass sie zuverlässig und insbesondere auch mit geringem Rechenaufwand in einem Kamerabild detektiert werden kann. Insbesondere kann vorgesehen sein, dass die Eigenstruktur lediglich in einem vorbestimmten Teilbereich des Kamerabilds gesucht wird, von dem bekannt ist, dass sich dort die Eigenstruktur bei freistehendem Kraftfahrzeug befinden muss. Dies beruht auf der Erkenntnis, dass die Relativlage der Eigenstruktur zu der Kamera bekannt ist.

Eine Ausführungsform sieht vor, dass durch die Bildanalyseeinrichtung in dem zumindest einen Kamerabild als eine Eigenstruktur eine vorbestimmte Fahrzeugfläche mit zumindest einer vorbestimmten optischen Eigenschaft und/oder zumindest ein vorbestimmtes Bauteil des Kraftfahrzeugs gesucht wird. Beispielsweise kann als eine Fahrzeugfläche die Oberfläche eines Blechs erfasst werden. Das Erfassen einer Fahrzeugfläche weist den Vorteil auf, dass erkannt werden kann, wo an dem Kraftfahrzeug ein Objekt anliegt. Ein Bauteil als mögliche Eigenstruktur weist den Vorteil auf, dass dessen Form zuverlässig in einen Kamerabild wieder erkannt werden kann. Hierzu kann beispielsweise eine Korrelation mit einer Schablone (Template) des Bauteils vorgesehen sein. Wird das Bauteil in den Kamerabild nicht erkannt, so ist die Sichtlinie zwischen Kamera und Bauteil durch ein anliegendes Objekt unterbrochen. Dies kann zuverlässig erkannt werden.

In Bezug auf die Fahrzeugfläche kann gemäß einer Ausführungsform als optische Eigenschaft zumindest eine vorbestimmte Farbe und/oder zumindest ein vorbestimmtes Kontrastverhältnis in einem vorbestimmten Teilbereich des zumindest einen Kamerabilds gesucht werden. Die vorbestimmte optische Eigenschaft bezieht sich somit auf die Farbe und/oder den Kontrast der Fahrzeugfläche. Hierdurch ergibt sich der Vorteil, dass auch bei einer Erkennungssituation, bei welcher Kanten nicht detektiert werden können, wie beispielsweise bei Nebel, die Farbe und/oder der Kontrast zum Erkennen der Eigenstruktur des Kraftfahrzeugs zugrunde gelegt werden kann.

Bisher wurde beschrieben, dass lediglich für den Erfassungsbereich einer einzelnen Kamera überprüft wird, ob innerhalb des Erfassungsbereichs ein Objekt am Kraftfahrzeug anliegt. Natürlich kann das Verfahren auch für mehrere Kameras durchgeführt werden, d.h. für jede der Kameras kann die beschriebene Freistandsprüfung durchgeführt werden. Eine Ausführungsform entsprechend sieht vor, dass durch die Steuervorrichtung aus zumindest einer weiteren Kamera jeweils zumindest ein Kamerabild empfangen wird, wobei insgesamt (also für alle Kameras zusammen) durch die Erfassungsbereiche aller Kameras eine Rundumerfassung des Kraftfahrzeugs gegeben ist und für jede der Kameras die Freistandsprüfung durchgeführt wird. Mit anderen Worten werden so viele Erfassungsbereiche vorgesehen, dass das Kraftfahrzeug rund um auf ein anliegendes Objekt hin geprüft werden kann (Freistandsprüfung). Hierdurch ergibt sich der Vorteil, dass das Blockiersignal erzeugt wird, sobald irgendwo am Kraftfahrzeug ein Objekt anliegt. Mit "rund um" ist insbesondere die Kontur des Kraftfahrzeugs in einer horizontalen Ebene gemeint. Eine Prüfung des Daches und/oder des Bodens des Kraftfahrzeugs kann ebenfalls vorgesehen sein, wobei aber mit dem Begriff "rund um" nur eine seitliche oder laterale Prüfung (Seiten rechts und links sowie Front und Heck) gemeint ist.

Als Erweiterung zu Erkennung zumindest einer Eigenstruktur des Kraftfahrzeugs sieht eine Ausführungsform vor, dass durch die Bildanalyseeinrichtung in dem zumindest einen Kamerabild auch eine Bodenstruktur eines Untergrunds, auf welchem das Kraftfahrzeug steht, gesucht wird und das Blockiersignal auch erzeugt wird, falls die Bodenstruktur (in den zumindest einen Kamerabild) unauffindbar ist. Mit anderen Worten wird die Sichtlinie von der Kamera bis hin zum Boden oder Untergrund daraufhin überprüft, ob sie frei ist. Dies ist dann der Fall, wenn die Bodenstruktur des Untergrunds erkannt werden kann. Hierdurch ergibt sich der Vorteil, dass auch ein Objekt, welches unter dem Kraftfahrzeug liegt und in den Erfassungsbereich der Kamera hineinragt, ebenfalls erkannt werden kann, selbst wenn es sich aus der Sicht der Kamera "hinter" der Eigenkontur des Kraftfahrzeugs befindet.

Um bei der Erkennung einer Eigenstruktur und/oder einer Bodenstruktur keine aufwändige Bildanalyse mit einer Formerkennung durchführen zu müssen, sieht eine Ausführungsform in vorteilhafter Weise vor, dass durch die Bildanalyseeinrichtung zu zumindest einem Zeitpunkt vor der Freistandsprüfung zumindest ein Referenzbild des Außenbereichs erzeugt wird. Mit anderen Worten wird mittels der zumindest einen Kamera der Erfassungsbereich abgelichtet, und zwar vor der Freistandsprüfung. Dies ergibt das zumindest eine Referenzbild. Bei dem Referenzbild wird davon ausgegangen, dass dies in einem Freizustand erfasst wird, wenn also kein Objekt an dem Kraftfahrzeug anliegt. Beispielsweise kann nach Verriegeln des Kraftfahrzeugs ein Benutzer aufgefordert werden, die Aufnahme des zumindest einen Referenzbilds auszulösen, wenn der Benutzer beispielsweise der Ansicht ist oder überprüft hat, dass das Kraftfahrzeug freisteht. Das zumindest eine Referenzbild kann auch beim Anhalten des Kraftfahrzeugs und/oder während einer vorbestimmten Zeitdauer nach dem Anhalten erzeugt werden (z.B. innerhalb der ersten 10 Sekunden ) . Auch dann kann davon ausgegangen werden, dass kein Objekt gegen das Kraftfahrzeug gelehnt ist. In der späteren Freistandsprüfung wird dann ein Bildvergleich des zumindest einen Kamerabilds mit dem zumindest eine Referenzbild durchgeführt. In anderen Worten muss also das zumindest eine Kamerabild denselben Bildinhalt wie das zumindest eine Referenzbild aufweisen, damit ein freistehendes Kraftfahrzeug erkannt wird. Wird bei dem Bildvergleich ein Unterschied zwischen dem zumindest einen Kamerabild und dem zumindest einen Referenzbild erkannt, so wird das Blockiersignal erzeugt. Der Bildvergleich kann auf einen vorbestimmten Teilbereich des zumindest einen Kamerabilds begrenzt sein. Dieser Teilbereich kann denjenigen Bildbereich betreffen, in welchem in den zumindest einen Kamerabild das Kraftfahrzeug selbst abgebildet sein muss, falls das Kraftfahrzeug frei steht. Der Vergleich kann zusätzlich oder alternativ auf eine oder einige Bildeigenschaften aus mehreren vorbestimmten Bildeigenschaften begrenzt sein, z.B. auf Kanten und/oder Muster (Texturen). Denn wegen der sich ändernden Lichtbedingungen während der Standzeit sind nicht alle Bildeigenschaften, z.B. Farbe und/oder Helligkeit, für einen Bildvergleich geeignet.

Um das erfindungsgemäße Verfahren durchzuführen, ist durch die Erfindung auch eine Steuervorrichtung für ein Kraftfahrzeug bereitgestellt. Die Steuervorrichtung kann beispielsweise als ein Steuergerät oder als ein Verbund mehrerer Steuergeräte ausgestaltet sein. Die Steuervorrichtung weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikrocontroller und/oder zumindest einen Mikroprozessor aufweisen. Die Verfahrensschritte können durch einen Programmcode für die Prozessoreinrichtung realisiert sein. Der Programmcode kann in einem Datenspeicher der Prozessoreinrichtung gespeichert sein.

Die Erfindung umfasst schließlich auch ein Kraftfahrzeug mit zumindest einer Kamera, deren Erfassungsbereich in einen Außenbereich des Kraftfahrzeugs und hierbei aber teilweise oder ganz auf eine Außenoberfläche des Kraftfahrzeugs ausgerichtet ist. Des Weiteren ist eine Ausführungsform der erfindungsgemäßen Steuervorrichtung vorgesehen, die mit der zumindest einen Kamera gekoppelt sein kann. Das Kraftfahrzeug kann einen Autopiloten aufweisen, bei welchem eine Losfahrt durch ein Blockiersignal der Steuervorrichtung blockiert oder unterbunden werden kann. Das erfindungsgemäße Kraftfahrzeug kann als Kraftwagen, beispielsweise als Personenkraftwagen oder Lastkraftwagen, ausgestaltet sein.

Die Erfindung umfasst auch die Kombinationen der beschriebenen Ausführungsformen.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs;
- Fig. 2: ein Flussschaudiagramm einer Ausführungsform des erfindungsgemäßen Verfahrens; und
- Fig. 3: eine schematische Darstellung eines Kamerabilds, in welchem durch eine Steuervorrichtung des Kraftfahrzeugs eine Eigenstruktur gesucht wird.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

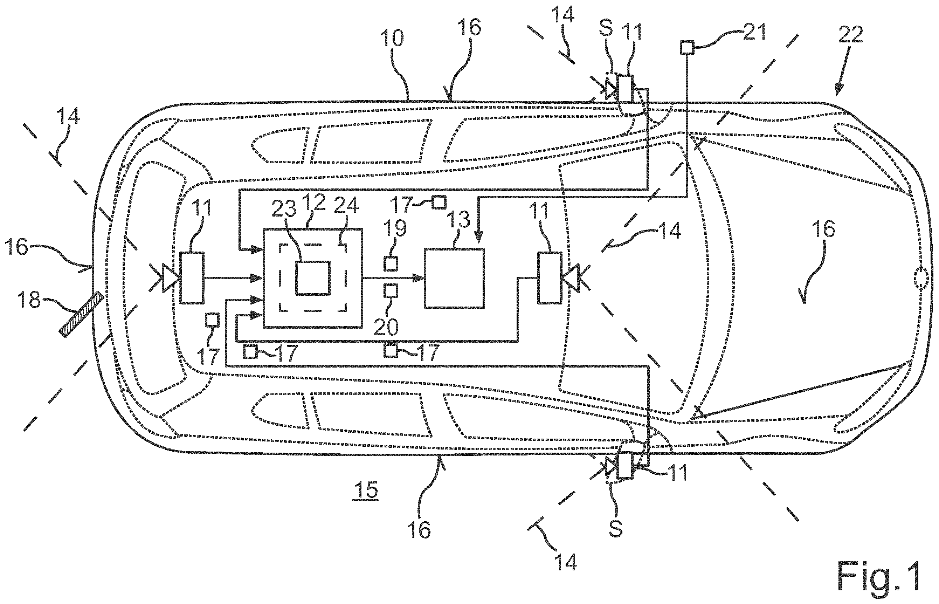

Fig. 1 zeigt ein Kraftfahrzeug 10, bei dem es sich um einen Kraftwagen, beispielsweise einem Personenkraftwagen oder Lastkraftwagen, handeln kann. Das Kraftfahrzeug 10 kann eine oder mehrere Kameras 11 und eine Steuervorrichtung 12 sowie optional einen Autopiloten 13 aufweisen. Erfassungsbereiche 14 der Kameras 11 können in eine Umgebung oder in einen Außenbereich 15 außerhalb des Kraftfahrzeugs 10 ausgerichtet sein. Hierbei sind aber die Erfassungsbereiche 14 derart ausgerichtet, dass stets auch in jedem Erfassungsbereich 14 ein Teil einer Außenoberfläche 16 des Kraftfahrzeugs 10 durch den Erfassungsbereich 14 erfasst ist, sodass bei freistehendem Kraftfahrzeug 10 in Kamerabildern 17 der Kameras 11 stets auch ein Teil des Kraftfahrzeugs 10 abgebildet ist. Eine jeweilige Kamera 11 kann hierzu beispielsweise jeweils in einem Seitenspiegel S des Kraftfahrzeugs 10 angeordnet sein. Eine Kamera 11 kann eine Frontkamera sein, die beispielsweise in einem Dachmodul angeordnet und zur Front des Fahrzeugs hin ausgerichtet sein kann. Eine Kamera 11 kann beispielsweise eine Rückfahrkamera sein, die in einem Heck des Kraftfahrzeugs 10 angeordnet sein kann. Die beschriebene Ausrichtung der Erfassungsbereiche 14 ergibt sich insbesondere im Betrieb der jeweiligen Kamera 11. Im Aus-Zustand kann eine Kamera 11 auch eingefahren oder versenkt sein.

Die Kamerabilder 17 zumindest einer der Kameras 11 können von der Steuervorrichtung 12 aus der jeweiligen Kamera 11 empfangen werden. Die Steuervorrichtung 12 kann anhand der Kamerabilder 17 entscheiden, ob das Kraftfahrzeug 10 freisteht oder ob im Gegensatz dazu zumindest ein Objekt 18 an den Kraftfahrzeug 10 angelehnt ist. Ist das Kraftfahrzeug 10 freistehend und erkennt dies die Steuervorrichtung 12, so kann sie ein Freistandssignal 19 erzeugen und beispielsweise an den Autopiloten 13 ausgeben. Falls durch die Steuervorrichtung 12 anhand der Kamerabilder 17 erkannt wird, dass ein Objekt 18 gegen das Kraftfahrzeug gelehnt ist oder an dem Kraftfahrzeug 10 anliegt, kann die Steuervorrichtung 12 ein Blockiersignal 20 erzeugen und beispielsweise an den Autopiloten 13 und optional zumindest ein weiteres Signal an Zumindest eine andere Komponente (z.B. einen Sensor oder einen Algorithmus) ausgeben. Durch das Blockiersignal 20 kann bei dem Autopiloten 13 blockiert oder verhindert werden, dass dieser auf ein Startsignal 21 hin los fährt und hierdurch das Objekt 18 beispielsweise umfällt. Das Startsignal 21 kann beispielsweise aus einer Fernbedienung eines Benutzers oder aus dem Internet empfangen werden und das Kraftfahrzeug 10 auffordern, seinen aktuellen Parkplatz 22 zu verlassen.

Zum Erkennen des zumindest einen Objekts 18 bzw. des Freistands des Kraftfahrzeugs 10 kann die Steuervorrichtung 12 eine Bildanalyseeinrichtung 23 aufweisen. Die Bildanalyseeinrichtung 23 kann der auf der Grundlage eines Programmmoduls für eine Prozessoreinrichtung 24 der Steuervorrichtung 12 realisiert sein.

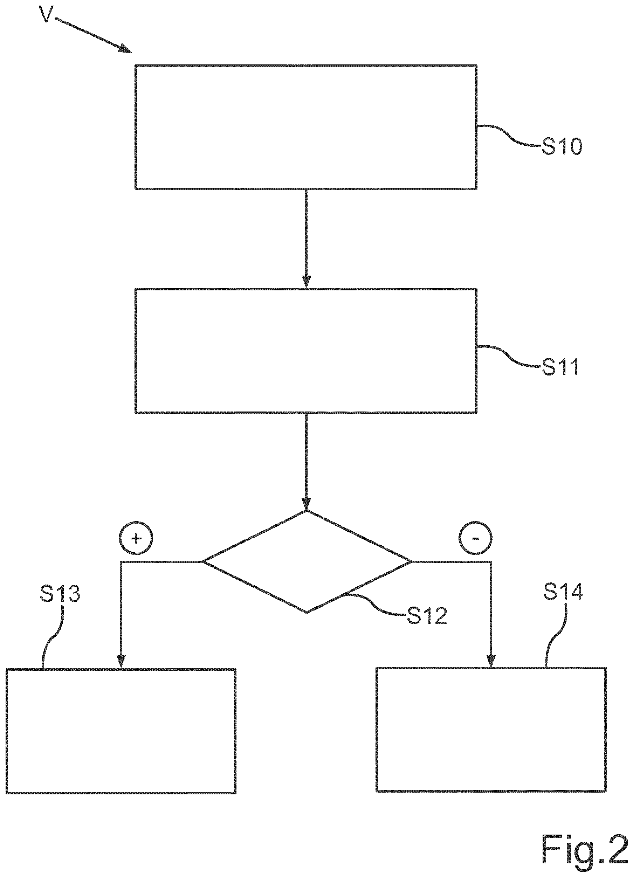

Fig. 2 veranschaulicht ein Verfahren V, welches durch die Steuervorrichtung 12 ausgeführt werden kann, um in Abhängigkeit von den Kamerabildern 17 entweder das Freistandssignal 19 oder das Blockiersignal 20 zu erzeugen.

In einem Schritt S10 können durch die Steuervorrichtung die mittels der Kamera 11 erzeugten Kamerabilder 17 erfasst oder empfangen werden.

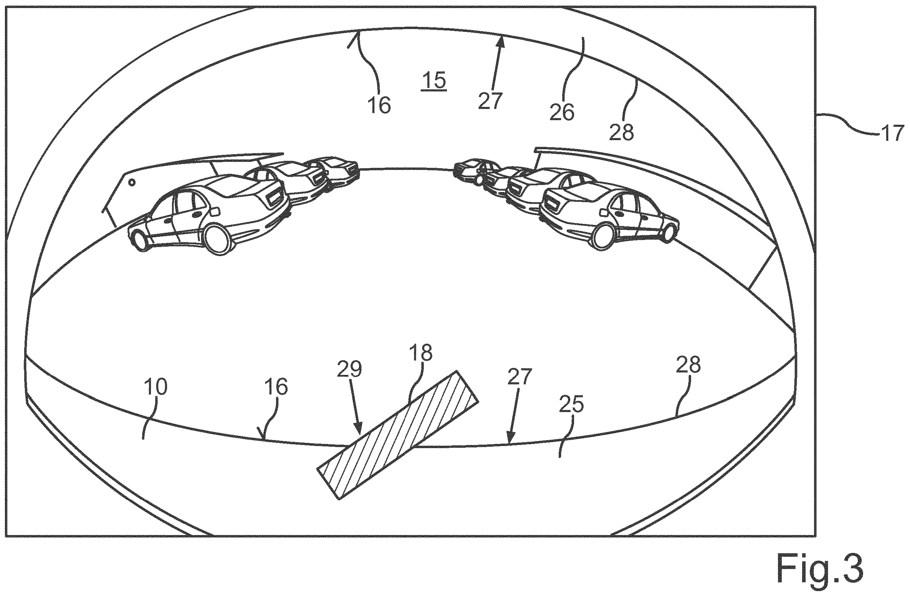

Im folgenden ist Schritt S11 im Zusammenhang mit Fig. 3 erläutert.

Fig. 3 zeigt beispielhaft ein Kamerabild 17, wie es beispielsweise durch eine Heckkamera des Kraftfahrzeugs 10 erzeugt worden sein kann. In dem Kamerabild 17 kann ein Teil des Außenbereichs 15 abgebildet sein. Des Weiteren können Außenoberflächen 16 beispielsweise eines rückwärtigen Stoßfängers 25 und einer Dachkante 26 abgebildet sein.

In dem Schritt S11 kann durch die Bildanalyseeinrichtung 23 geprüft werden, ob zumindest eine vorbestimmte Eigenstruktur 27 des Kraftfahrzeugs 10 in dem Kamerabild 17 abgebildet ist. Bei der Eigenstruktur 27 kann es sich beispielsweise um eine Außenkontur oder einen Kantenverlauf 28 handeln, wie er sich aus der Sicht oder Perspektive der Kamera 11 im Kamerabild 17 geben muss, wenn das Kraftfahrzeug 10 freisteht. In dem in Fig. 3 veranschaulicht Beispiel lehnt das Objekt 18 gegen das Kraftfahrzeug 10, sodass die Eigenstruktur 27 in Form des Kantenverlaufs 28 an der Stelle, an welcher das Objekt 18 gegen das Kraftfahrzeug 10 lehnt, eine Unterbrechung 29 aufweist. Die Unterbrechung 29 ergibt sich, weil das Objekt 18 die Eigenstruktur 27 in Form des Kantenverlauf 28 verdeckt oder überdeckt. Somit kann also die Eigenstruktur 27 in Form des Kantenverlaufs 28 durch die Bildanalyseeinrichtung 23 im Kamerabild 17 nicht erkannt werden. Die Eigenstruktur 27 bleibt somit durch die Bildanalyseeinrichtung 23 unauffindbar.

In einem Schritt S12 (siehe Fig. 2) kann die Steuervorrichtung 12 überprüfen, ob die Eigenstruktur 27 im Kamerabild 17 durch die Bildanalyseeinrichtung 23 erkannt werden konnte. Ist dies der Fall (in Fig. 2 durch ein "+"-Zeichen symbolisiert), so kann in einem Schritt S13 das Freistandssignal 19 erzeugt werden, welches für den jeweiligen Erfassungsbereich 14 der jeweiligen Kamera 11 signalisiert, dass dort kein Objekt am Kraftfahrzeug 10 anliegt.

Wird dagegen im Schritt S12 festgestellt, dass die Eigenstruktur 27 unauffindbar ist, also nicht oder nicht vollständig in dem Kamerabild 17 erkannt werden kann (in der Fig. 2 durch ein "-"-Zeichen symbolisiert), so kann in einem Schritt S14 das Blockiersignal 20 erzeugt werden. Das Blockiersignal 20 signalisiert, dass im jeweiligen Erfassungsbereich 14 der jeweiligen Kamera 11 ein Objekt 18 am Kraftfahrzeug 10 anliegt.

Bei dem Kraftfahrzeug 10 ist somit vorgesehen, mittels einer Kamera, die zum Beispiel in einem Seitenspiegel S angeordnet sein kann, den Sichtbereich oder Erfassungsbereich einschließlich der Fahrzeugkontur zu beobachten.

Mit einer Bildanalyseeinrichtung oder einer Bildverarbeitung wird geprüft, ob statische Fahrzeugteile und Fahrzeugkonturen sichtbar bzw. nicht verdeckt sind. Dadurch können zum Beispiel Personen oder Gegenstände (Allgemeinobjekte) im direkten Umfeld des Kraftfahrzeugs 10 erkannt werden, auch wenn diese stark verzerrt sind oder nur teilweise sichtbar sind.

Das Verfahren beruht darauf, bekannte Strukturen am eigenen Kraftfahrzeug zu überwachen. Hierzu kann mit einer einfach zu Implementierungen Bildverarbeitungsoperation, wie beispielsweise eine Analyse eines Kantenverlaufs, eine Verdeckung eine Eigenstruktur des Kraftfahrzeugs erkannt werden. Eine exemplarische Ausführungsform sieht vor, dass Kantenverläufe in einem Kamera Bild einer Seitenkamera zunächst im Normalzustand oder Freistands (keine Hindernisse vorhanden) erfasst wird. Die Kantenverläufe orientieren sich an der im Kamerabild sichtbaren Karosse oder Außenoberfläche. Wenn ein Gegenstand oder eine Person, d.h. allgemein ein Objekt, die sonst sichtbare Außenoberfläche oder Karosse verdeckt, wird die freie Sichtkontur oder der Kantenverlauf verletzt. Ein Hindernis wird über ein entsprechendes Blockiersignal gemeldet.

Weitere Ausführungsformen können eine Auswertung der Sichtbarkeit von Bodenstruktur und/oder einer spezifischen Fahrzeugfläche und deren Eigenschaften (Kontrast und/oder Farbe) vorsehen.

Allerdings weist das Erkennen eine Eigenstruktur eine geringere Abhängigkeit von den Umgebungsbedingungen auf und kann durch eine einfachere Bildverarbeitung umgesetzt werden.

Durch das Verfahren ist eine optische Sensierung von am Kraftfahrzeug anliegenden Hindernissen überhaupt erst ermöglicht.

Insgesamt zeigt das Beispiel, wie durch die Erfindung eine optische Sensierung von an einem Kraftfahrzeug anliegenden Hinternissen bereitgestellt werden kann.

### Bezugszeichenliste

- 10: Kraftfahrzeug
- 11: Kamera
- 12: Steuervorrichtung
- 13: Autopilot
- 14: Erfassungsbereich
- 15: Außenbereich
- 16: Außenoberfläche
- 17: Kamerabild
- 18: Objekt
- 19: Freistandssignal
- 20: Blockiersignal
- 21: Startsignal
- 22: Parkplatz
- 23: Bildanalyseeinrichtung
- 24: Prozessoreinrichtung
- 25: Stoßfänger
- 26: Dachkante
- 27: Eigenstruktur
- 28: Kantenverlauf
- 29: Verdeckung
- S: Seitenspiegel
- V: Verfahren

## Patentansprüche

1. Verfahren (V) zum Erkennen von zumindest einem an einem Kraftfahrzeug (10) anliegenden Objekt (18), wobei durch eine Steuervorrichtung (12) mittels einer Kamera (11) zumindest ein Kamerabild (17) erfasst wird, wobei ein Erfassungsbereich (14) der Kamera (11) in einen Außenbereich (15) des Kraftfahrzeugs (10) und teilweise oder ganz auf eine Außenoberfläche (16) des Kraftfahrzeugs (10) ausgerichtet ist,
**dadurch gekennzeichnet, dass**
für eine Freistandsprüfung in dem zumindest einen Kamerabild (17) durch eine Bildanalyseeinrichtung (23) der Steuervorrichtung (12) geprüft wird, ob zumindest eine vorbestimmte Eigenstruktur (27) des Kraftfahrzeugs (10) abgebildet ist, und für den Fall, dass die zumindest eine Eigenstruktur (27) durch die Bildanalyseeinrichtung (23) unauffindbar ist, ein Blockiersignal (20), welches angibt, dass ein Objekt (18) an dem Kraftfahrzeug (10) anliegt, erzeugt wird, wobei durch einen Autopiloten (13) des Kraftfahrzeugs (10) ein Startsignal (21) zum Losfahren empfangen wird und der Autopilot (13) nur losfährt, falls kein Blockiersignal (20) vorliegt.

2. Verfahren (V) nach Anspruch 1, wobei durch die Bildanalyseeinrichtung (23) als Eigenstruktur (27) eine vorbestimmte Außenkontur (28) des Kraftfahrzeugs (10) in dem zumindest einen Kamerabild (17) gesucht wird.

3. Verfahren (V) nach einem der vorhergehenden Ansprüche, wobei durch die Bildanalyseeinrichtung (23) als Eigenstruktur (27) eine vorbestimmte Fahrzeugfläche mit zumindest einer vorbestimmten optischen Eigenschaft und/oder zumindest ein vorbestimmtes Bauteil des Kraftfahrzeugs (10) gesucht wird.

4. Verfahren (V) nach Anspruch 3, wobei als optische Eigenschaft zumindest eine vorbestimmte Farbe und/oder zumindest ein vorbestimmtes Kontrastverhältnis in einem vorbestimmten Teilbereich des zumindest einen Kamerabilds (17) gesucht wird.

5. Verfahren (V) nach einem der vorhergehenden Ansprüche, wobei durch die Steuervorrichtung (12) aus zumindest einer weiteren Kamera (11) jeweils zumindest ein Kamerabild (17) empfangen wird, wobei insgesamt durch die Erfassungsbereiche (14) aller Kameras (11) eine Rundumerfassung des Kraftfahrzeugs (10) gegeben ist und für jede der Kameras (11) die Freistandsprüfung durchgeführt wird.

6. Verfahren (V) nach einem der vorhergehenden Ansprüche, wobei durch die Bildanalyseeinrichtung (23) in dem zumindest einen Kamerabild (11) eine Bodenstruktur eines Untergrunds, auf welchem das Kraftfahrzeug (10) steht, gesucht wird und das Blockiersignal (20) auch erzeugt wird, falls die Bodenstruktur unauffindbar ist.

7. Verfahren (V) nach einem der vorhergehenden Ansprüche, wobei durch die Bildanalyseeinrichtung (23) zu zumindest einem Zeitpunkt vor der Freistandsprüfung zumindest ein Referenzbild des Außenbereichs (15) erzeugt wird und in der Freistandsprüfung ein Bildvergleich des zumindest einen Kamerabilds (17) mit dem zumindest einen Referenzbild durchgeführt wird.

8. Steuervorrichtung (12) für ein Kraftfahrzeug (10), mit einer Prozessoreinrichtung (24), die dazu eingerichtet ist, ein Verfahren nach einem der vorhergehenden Ansprüche durchzuführen.

9. Kraftfahrzeug (10) mit zumindest einer Kamera (11), deren Erfassungsbereich (14) in einen Außenbereich (15) des Kraftfahrzeugs (10) und teilweise oder ganz auf eine Au-ßenoberfläche (16) des Kraftfahrzeugs (10) ausgerichtet ist, und mit einer Steuervorrichtung (12) nach Anspruch 8.

## Claims

1. Method (V) for detecting at least one object (18) resting against a motor vehicle (10), wherein at least one camera image (17) is captured by means of a camera (11) using a control apparatus (12), wherein a capture region (14) of the camera (11) is directed into an exterior region (15) of the motor vehicle (10) and, in part or entirely, onto an exterior surface (16) of the motor vehicle (10),
**characterized in that**,
for a free-standing check, a check is performed in the at least one camera image (17) using an image analysis device (23) of the control apparatus (12) as to whether at least one predetermined own structure (27) of the motor vehicle (10) is depicted and, in the event that the at least one own structure (27) cannot be found using the image analysis device (23), a blocking signal (20) indicating that an object (18) is resting against the motor vehicle (10) is generated, wherein a starting signal (21) for starting to drive is received by an autopilot (13) of the motor vehicle (10) and the autopilot (13) starts to drive only in the absence of a blocking signal (20).

2. Method (V) according to Claim 1, wherein, as the own structure (27), a predetermined outer contour (28) of the motor vehicle (10) is searched for using the image analysis device (23) in the at least one camera image (17) .

3. Method (V) according to either of the preceding claims, wherein, as the own structure (27), a predetermined vehicle surface having at least one predetermined optical property and/or at least one predetermined component of the motor vehicle (10) is searched for using the image analysis device (23).

4. Method (V) according to Claim 3, wherein, as the optical property, at least one predetermined colour and/or at least one predetermined contrast ratio is searched for in a predetermined partial region of the at least one camera image (17).

5. Method (V) according to one of the preceding claims, wherein at least one respective camera image (17) is received from at least one further camera (11) by way of the control apparatus (12), wherein overall, all-round coverage in capturing the motor vehicle (10) is provided by way of the capture regions (14) of all the cameras (11) and the free-standing check is performed for each of the cameras (11).

6. Method (V) according to one of the preceding claims, wherein a ground structure of a ground surface on which the motor vehicle (10) is located is searched for in the at least one camera image (11) using the image analysis device (23), and the blocking signal (20) is also generated if the ground structure cannot be found.

7. Method (V) according to one of the preceding claims, wherein at least one reference image of the exterior region (15) is generated using the image analysis device (23) at at least one time before the free-standing check and an image comparison of the at least one camera image (17) with the at least one reference image is performed during the free-standing check.

8. Control apparatus (12) for a motor vehicle (10), having a processor device (24), which is configured to carry out a method according to one of the preceding claims.

9. Motor vehicle (10) having at least one camera (11), the capture region (14) of which is directed into an exterior region (15) of the motor vehicle (10) and, in part or entirely, onto an exterior surface (16) of the motor vehicle (10), and having a control apparatus (12) according to Claim 8.

## Revendications

1. Procédé (V) permettant de reconnaître au moins un objet (18) adjacent à un véhicule automobile (10), dans lequel un dispositif de commande (12) détecte au moyen d'une caméra (11) au moins une image de caméra (17), une zone de détection (14) de la caméra (11) étant orientée vers une zone extérieure (15) du véhicule automobile (10) en partiellement ou complètement sur une surface extérieure (16) du véhicule automobile (10),
**caractérisé en ce que** pour une vérification d'état dégagé sur ladite au moins une image de caméra (17), un équipement d'analyse d'image (23) du dispositif de commande (12) vérifie si au moins une structure propre prédéterminée (27) du véhicule automobile (10) est représentée, et au cas où ladite au moins une structure propre (27) serait introuvable par l'équipement d'analyse d'image (23), un signal de blocage (20) indiquant qu'un objet (18) est adjacent au véhicule automobile (10) est produit, dans lequel un pilote automatique (13) du véhicule automobile (10) reçoit un signal de départ (21) pour démarrer, et le pilote automatique (13) ne démarre que si aucun signal de blocage (20) n'est présent.

2. Procédé (V) selon la revendication 1, dans lequel l'équipement d'analyse d'image (23) cherche comme structure propre (27) un contour extérieur prédéterminé (28) du véhicule automobile (10) sur ladite au moins une image de caméra (17).

3. Procédé (V) selon l'une quelconque des revendications précédentes, dans lequel l'équipement d'analyse d'image (23) cherche comme structure propre (27) une surface de véhicule prédéterminée ayant au moins une propriété optique prédéterminée et/ou au moins un composant prédéterminé du véhicule automobile (10) .

4. Procédé (V) selon la revendication 3, dans lequel comme propriété optique, on cherche au moins une couleur prédéterminée et/ou au moins un rapport de contraste prédéterminé dans une zone partielle prédéterminée de ladite au moins une image de caméra (17) .

5. Procédé (V) selon l'une quelconque des revendications précédentes, dans lequel le dispositif de commande (12) reçoit à partir d'au moins une autre caméra (11) respectivement au moins une image de caméra (17), dans lequel les zones de détection (14) de toutes les caméras (11) assurent globalement une détection panoramique du véhicule automobile (10), et la vérification d'état dégagé est effectuée pour chacune des caméras (11).

6. Procédé (V) selon l'une quelconque des revendications précédentes, dans lequel l'équipement d'analyse d'image (23) cherche sur ladite au moins une image de caméra (11) une structure de terrain d'un sol sur lequel se trouve le véhicule automobile (10), et le signal de blocage (20) est également produit si la structure de terrain est introuvable.

7. Procédé (V) selon l'une quelconque des revendications précédentes, dans lequel l'équipement d'analyse d'image (23) produit à au moins un instant avant la vérification d'état dégagé au moins une image de référence de la zone extérieure (15), et dans la vérification d'état dégagé, une comparaison d'image de ladite au moins une image de caméra (17) avec ladite au moins une image de référence est effectuée.

8. Dispositif de commande (12) pour un véhicule automobile (10), comprenant un équipement processeur (24) qui est conçu pour exécuter un procédé selon l'une quelconque des revendications précédentes.

9. Véhicule automobile (10) comprenant au moins une caméra (11) dont la zone de détection (14) est orientée vers une zone extérieure (15) du véhicule automobile (10) et partiellement ou complètement sur une surface extérieure (16) du véhicule automobile (10), et comprenant un dispositif de commande (12) selon la revendication 8.
